Europäisches Patentamt

European Patent Office

Office européen des brevets

Veröffentlichungsnummer: **0 285 981**
**A2**

## EUROPÄISCHE PATENTANMELDUNG

Anmeldenummer: 88105049.6

Int. Cl.⁴ **G01N 33/44** , **G01N 19/04**

Anmeldetag: 29.03.88

Priorität: 09.04.87 DE 3712073

Veröffentlichungstag der Anmeldung:
**12.10.88 Patentblatt 88/41**

Benannte Vertragsstaaten:
**DE FR GB IT**

Anmelder: **BAYER AG**
**Konzernverwaltung RP Patentabteilung**
**D-5090 Leverkusen 1 Bayerwerk(DE)**

Erfinder: **Bottenbruch, Ludwig, Dr.**
**Wöhlerstrasse 5**
**D-4150 Krefeld(DE)**
Erfinder: **Traenckner, Hans-Joachim, Dr.**
**Wedelstrasse 46**
**D-4150 Krefeld(DE)**
Erfinder: **Hampe, Andreas, Dr.**
**Lotzestrasse 7**
**D-1000 Berlin 45(DE)**
Erfinder: **Schumacher, Klaus**
**Innsbrucker Strasse 57**
**D-1000 Berlin 62(DE)**

Verfahren und Vorrichtung zur Messung der Haftung von Fasern in faserverstärkten Kunstoffen.

Die Haftung einer in einer Polymermatrix (7) eingebetteten Einzelfaser wird mittels eines Zugversuches bestimmt. bei dem die Faser (6) aus der Polymermatrix (7) herausgezogen wird und gleichzeitig das zugehörige Kraft-Weg-Diagramm registriert wird. Zu diesem Zweck wird ein aus der Polymermatrix (7) mit der darin eingebetteten Einzelfaser (6) bestehender Probekörper dadurch hergestellt. daß auf einem Objekthalter (5) eine in Granulat-oder Pulverform vorliegende Polymermenge aufgeschmolzen wird. die Einzelfaser (6) in die aufgeschmolzene Polymermasse eingetaucht wird und die Polymermasse danach unter den Schmelzepunkt abgekühlt wird. Anschließend wird der Objekthalter (5) mit dem daran haftenden Probekörper (6.7) in eine Kraft-Weg-Meßeinrichtung gebracht und das freie Ende der Faser (6) an einer in Faserrichtung verfahrbaren Einspannvorrichtung (10) fixiert. Bei dem Zugversuch werden nun die auf die Faser einwirkende Zugkraft mittels des Kraftaufnehmers (2) und gleichzeitig der von der Einspannvorrichtung (10) zurückgelegte Weg durch den Wegaufnehmer (13) in entsprechende elektrische Signale umgesetzt und ausgewertet.

FIG 1

## Verfahren und Vorrichtung zur Messung der Haftung von Fasern in faserverstärkten Kunststoffen

Die Erfindung betrifft ein Verfahren und eine Vorrichtung zur Bestimmung der Haftung einer in einer Kunststoffmatrix eingebetteten Einzelfaser. Das Verfahren bzw. die Vorrichtung beruhen darauf, daß ein Zugversuch durchgeführt wird, bei dem die Faser aus der Kunststoffmatrix herausgezogen und gleichzeitig das dazugehörige Kraft-Weg-Diagramm registriert wird.

Die mechanischen Eigenschaften wie z.B. die Festigkeit, der Elastizitätsmodul oder das Dämpfungsverhalten von faserverstärkten Kunststoffen werden maßgeblich durch die Haftkräfte der Fasern in der Kunststoffmatrix bestimmt. Die Haftfestigkeit der Fasern kann mit dem oben erwähnten Zugversuch direkt gemessen werden. Wichtig ist dabei, daß diese Messung an einer einzelnen Faser erfolgt. Anderenfalls würde man nur undefinierte Mittelwerte mit verhältnismäßig geringer Aussagekraft erhalten.

Man könnte daran denken, Proben von faserverstärkten Kunststoffen derart zu präparieren, daß einzelne Fasern aus der Kunststoffmatrix herausstehen, die dann in einem Zugversuch aus der Probe herausgezogen werden. Abgesehen davon, daß eine solche Präparationstechnik diffizil und mit einem relativ großen Aufwand verbunden ist, besteht das grundsätzliche Problem, daß bei der Probenpräparation die Haftung der Fasern, d.i. die zu untersuchende Größe, in unkontrollierter Weise beeinflußt und verändert wird, so daß systematische Meßfehler entstehen und die Messung nicht mehr repräsentativ ist. Bei der Durchführung von Zugversuchen dieser Art werden daher im Rahmen der vorliegenden Erfindung folgende Zielsetzungen als vorrangig angesehen:

a) Die Probenpräparation bzw. die Herstellung der Probekörper soll möglichst einfach und - schnell vonstatten gehen.

b) Unter gleichen Bedingungen hergestellte Probekörper müssen reproduzierbare Meßergebnisse liefern.

c) Bei der Probenpräparation sollen die für die Haftkräfte verantwortlichen chemischen und physikalischen Eigenschaften der Faser und der Kunststoffmatrix gezielt variierbar sein.

Ausgehend von diesen Zielsetzungen liegt der Erfindung daher die Aufgabe zugrunde, bei systematischen, praxisrelevanten Untersuchungen der Faserhaftung in polymeren Verbundwerkstoffen die Aussagekraft des Zugversuches im Hinblick auf die Optimierung der mechanischen Eigenschaften solcher Verbundwerkstoffe zu verbessern.

Diese Aufgabe wird erfindungsgemäß dadurch gelöst, daß ein Probekörper einer in einer Kunststoffmatrix eingebetteten Einzelfaser dadurch hergestellt wird, daß auf einem Objekthalter eine in Granulat-oder Pulverform vorliegende Kunststoffmenge aufgeschmolzen wird, die Einzelfaser in axialer Richtung senkrecht zum Objekthalter abgesenkt und in die aufgeschmolzene Masse eingetaucht und die aufgeschmolzene Masse mit der darin eingebetteten Faser anschließend unter den Schmelzpunkt abgekühlt wird. Der Objekthalter mit dem daran haftenden Probekörper wird sodann in eine Kraft-Weg-Meßeinrichtung gebracht und das freie Ende der Faser 6 an einer in Faserrichtung verfahrbaren Fasereinspannvorrichtung fixiert, deren Hub vom Wegaufnehmer 13 erfaßt und in ein entsprechendes elektrisches Signal umgesetzt wird. Im Anschluß daran wird der Zugversuch durchgeführt und das zugeordnete Kraft-Weg-Diagramm aufgezeichnet.

Vorteilhaft wird nach dem Zugversuch die Kunststoffmatrix in Höhe der Fasereinbettung senkrecht zur Faserachse durchschnitten, so daß die Schnittoberfläche das der Faser entsprechende Loch enthält. Der Faserdurchmesser kann dann durch mikroskopische Vermessung des Loches bestimmt werden.

Bei der Herstellung des Probekörpers erfolgt der Eintauchvorgang zweckmäßig über eine vorgegebene einstellbare Länge, so daß die Einbettlänge der Faser in der Kunststoffmatrix variiert werden kann.

Die Weiterverarbeitung des Meßsignals läßt sich vereinfachen, wenn im Kraft-Meßteil ein Kraftaufnehmer verwendet wird, dessen Wegänderung bei variierender Kraft vernachlässigbar klein bleibt.

Gemäß einer Weiterbildung der Erfindung wird die Einbettlänge der Faser beim Zugversuch aus der Differenz der Wegaufnehmerpositionen beim Ablösen der Faser aus der Kunststoffmatrix und nach Herausziehen der Faser und Umschalten der Bewegungsrichtung beim Aufstoßen des Faserendes auf die Matrixoberfläche ermittelt. Dieses Verfahren gestattet eine sehr präzise Bestimmung der Einbettlänge.

Eine Weiterentwicklung des erfindungsgemäßen Verfahrens besteht darin, daß simultan mit dem Zugversuch eine Schallemissionsanalyse durchgeführt wird, bei der die während des Zugversuches auftretenden akustischen Signale erfaßt und ausgewertet werden.

Die Vorrichtung zur Durchführung des erfindungsgemäßen Verfahrens beruht auf einer Kraft-Weg-Meßeinrichtung mit einer Halterung für den Probekörper und einer in Faserrichtung verfahrbaren Fasereinspannvorrichtung. Die Vorrichtung ist erfindungsgemäß dadurch gekennzeichnet, daß zur Kraftmessung ein elektronischer Kraftaufnehmer mit der Halterung für den aus der Kunststoffmatrix und der darin eingebetteten Faser bestehenden Probekörper mechanisch verbunden ist. daß zur Wegmessung ein elektronischer Wegaufnehmer mit der Fasereinspannvorrichtung in Verbindung steht und die vom Kraft-bzw. Wegaufnehmer erzeugten elektrischen Signale den beiden Kanälen eines XY-Schreibers zugeführt werden.

Vorzugsweise besteht der Kraftaufnehmer aus einer nach dem Prinzip der Nullmethode arbeitenden elektronischen Waage. Dies bedeutet. daß am Kraftaufnehmer keine Wegänderungen auftreten: d.h. es ist eine weglose Kraftmessung möglich.

Weiterhin ist die Fasereinspannvorrichtung vorteilhaft mit Klemmbacken zur Fixierung des Faserendes ausgestattet. von denen wenigstens eine aus einem thermoplastischen halbharten Material besteht. Dadurch wird eine einwandfreie zuverlässige Fixierung des Faserendes beim Zugversuch ermöglicht.

Die für die Meßwertausgabe notwendige Anpassung der Kraft-und Wegsignale erfolgt zweckmäßig in einem Rechner. in dem gleichzeitig die für die Messung charakteristischen Parameter und Randbedingungen gespeichert werden können.

Mit der Erfindung werden folgende Vorteile erzielt:

- Der zur Durchführung eines Zugversuches einschließlich der dazugehörigen Herstellung der Probekörper (Proben präparation) erforderliche Arbeitsaufwand hält sich in einem vernünftigen Rahmen. Dadurch werden die Voraussetzungen für die systematische Untersuchung einer Vielzahl von Proben mit vertretbarem Arbeitsaufwand geschaffen.

- Unter gleichen Bedingungen hergestellte Probekörper liefern reproduzierbare Meßergebnisse. Dies ist erfahrungsgemäß bei der bisher üblichen Versuchsführung nicht immer gewährleistet.

- Die einfache und übersichtliche Präparationstechnik bei der Herstellung der Probekörper erlaubt es. die physikalischen und chemischen Eigenschaften sowohl der Polymermatrix als auch der Faser systematisch zu variieren. So kann z.B. der Einfluß einer Oberflächenpräparation der Faser. z.B. eine schlichte Behandlung, die Temperaturführung beim Einbetten der Faser und der Einfluß der Oberflächenrauhigkeit der Faser berücksichtigt werden.

- Die Messung verfälschende Verformungseffekte beim Einspannen der Faser können vermieden werden.

- Die gleichzeitige Untersuchung der bei einem Zugversuch auftretenden akustischen Emission liefert einen wichtigen Beitrag zum Verständnis der an der Grenzschicht zwischen Faser und Kunststoffmatrix ablaufenden Mikroverformungs-und Relaxationseffekte.

- Das erfindungsgemäße Verfahren eignet sich auch vorteilhaft zur Untersuchung von Verbundwerkstoffen auf der Basis von thermisch härtbaren bzw. vernetzbaren Polymeren (Duroplaste). In diesem Falle wird zur Präparation des Probekörpers die Faser nicht in eine angeschmolzene, sondern eine chemisch vernetzbare Polymermasse abgesenkt und eingetaucht.

Im folgenden wird die Erfindung anhand von Zeichnungen und Ausführungsbeispielen näher erläutert. Es zeigen

Fig. 1 den schematischen Aufbau der Meßapparatur für den Zugversuch.

Fig. 2 die Einspannvorrichtung für die Faser.

Fig. 3 ein typisches. mit der Apparatur gemäß Fig. 1 aufgenommenes Kraft-Weg-Meßdiagramm.

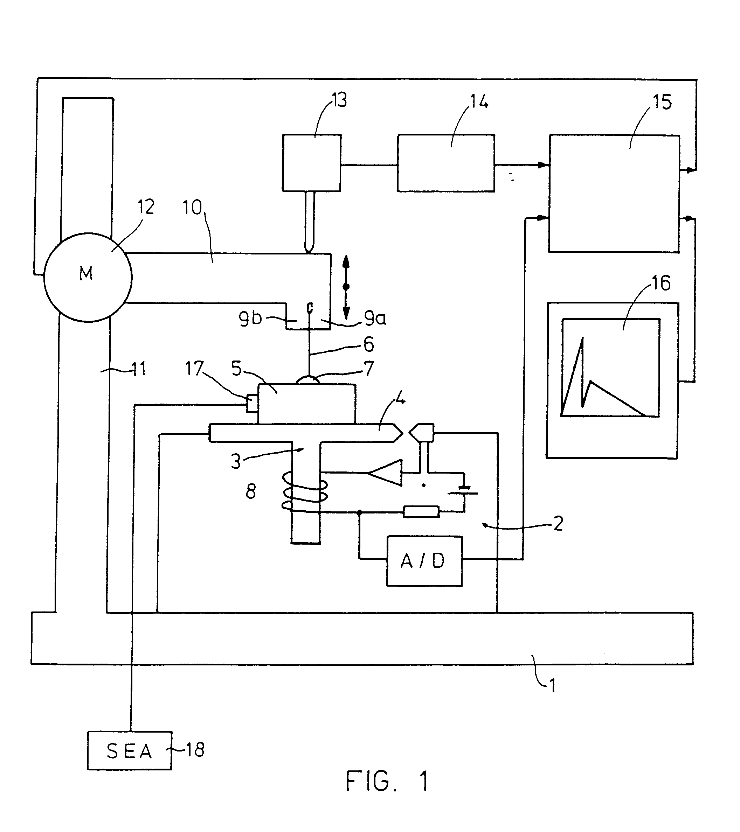

Bei der Meßapparatur nach Fig. 1 ist auf einer Grundplatte 1 ein Kraftaufnehmer 2 montiert. der hier aus einer elektronischen Waage 3 besteht. Auf ihrer Waagschale 4 ist eine Probenhalterung 5 befestigt. die einen aus der Faser 6 und der Polymermatrix 7 bestehenden Probekörper trägt. Die elektronische Waage 3 funktioniert in der Weise. daß bei einer Kraftbelastung (Zug nach oben) durch den Elektromagnet 8 eine gleich große Gegenkraft erzeugt wird. die den Waagebalken 4 wieder zurück in die Gleichgewichtslage bringt. Als Meßsignal wird dann der durch den Elektromagnet 8 fließende Strom herangezogen.

Diese Art der Kraftmessung (Nullmethode) hat den Vorteil, daß die Kraftmessung weglos erfolgt. d.h. daß bei dem Kraftaufnehmer kein Verschiebungsweg erforderlich ist. um ein Meßsignal zu erzeugen. Anstelle einer nach dem Prinzip der Nullmethode arbeitenden elektrischen Waage könnte natürlich auch ein anderer handelsüblicher Kraftaufnehmer (Kraftsensor) eingesetzt werden, dessen Wegänderung bei den hier infrage kommenden Kraftmeßbereichen vernachlässigbar klein ist (>1 μm).

Das obere Ende der Faser 6 ist mittels der Klemmbacken 9 fest mit der Einspannvorrichtung 10 verbunden. Die Einspannvorrichtung 10 ist über ein Zahnstangengetriebe (nicht gezeigt) und einen an dem vertikalen Träger 11 angeordneten Motor 12 in Richtung der Faser 6. d.h. senkrecht zur Waagschale 4, verfahrbar. Bewegt sich die Einspannvorrichtung 10 z.B. nach oben. so wird eine definierte Zugkraft auf die Faser 6 ausgeübt. die mit dem Kraftaufnehmer 2 gemessen werden kann. Der zurückgelegte Weg wird von einem mit der Einspannvorrichtung 10 in Verbindung stehenden Wegaufnehmer 13 erfaßt und in ein entsprechendes elektrisches Signal umgewandelt. Die Kraft-bzw. Wegmeßsignale werden gegebenenfalls über ein Interface 14 einem Rechner 15 zugeleitet und von einem Drucker 16 in Form eines XY-Diagrammes ausgegeben. Die Y-Koordinate entspricht dabei der Zugkraft und die X-Koordinate dem zurückgelegten Weg (vgl. auch Fig. 3).

An der Halterung 5 für den Probekörper 6. 7 ist ferner ein Schallsensor 17 angebracht. der die beim Herausziehen der Faser 6 aus der Polymermatrix 7 entstehenden Schallsignale in elektrische Signale umwandelt. Diese Signale werden dann einem Schallemissionsanalysator 18 zugeführt. Derartige Geräte sind prinzipiell bekannt und in der Literatur beschrieben (siehe z.B. A.G. Beattie. Acoustic Emission Principles and Instr. Journ. of Acoustic Emission Vol. 2. No. 1 2 p. 95-128 (1983)-). Mit Hilfe diese Gerätes können z.B. die Frequenz, die Gesamtenergie und der Spitzenwert einer Folge von akustischen Signalen bestimmt werden. Einem bestimmten mechanischen Vorgang ist normalerweise auch eine bestimmte akustische Signalfolge zugeordnet. so daß man in diesem Zusammenhang von einem Schallereignis spricht. Im vorliegenden Fall wird nun gleichzeitig mit dem Zugversuch eine Schallemissionsanalyse durchgeführt. so daß die beim Herausziehen der Faser 6 aus der Polymermatrix 7 entstehenden Schallsignale analysiert werden können. Es hat sich nun gezeigt. daß die dabei auftretenden Schallereignisse mit den nacheinander ablaufenden mechanischen Vorgängen beim Herausziehen der Faser korreliert werden können. Beim Herausziehen der Faser werden nämlich deutlich getrennte Schallereignisse beobachtet. die man den einzelnen Kurvenabschnitten im Kraft-Weg-Diagramm nach Fig. 3 zuordnen kann. Die mechanischen Eigenschaften eines Faserverbundwerkstoffes werden maßgeblich durch die Grenzschicht zwischen der Faser und der Polymermatrix bestimmt. Man kann davon ausgehen, daß die Schallemissionsanalyse in Verbindung mit dem Zugversuch wert volle Hinweise auf das Grenzschichtverhalten liefert und damit neue Wege für die Optimierung solcher Werkstoffe eröffnet.

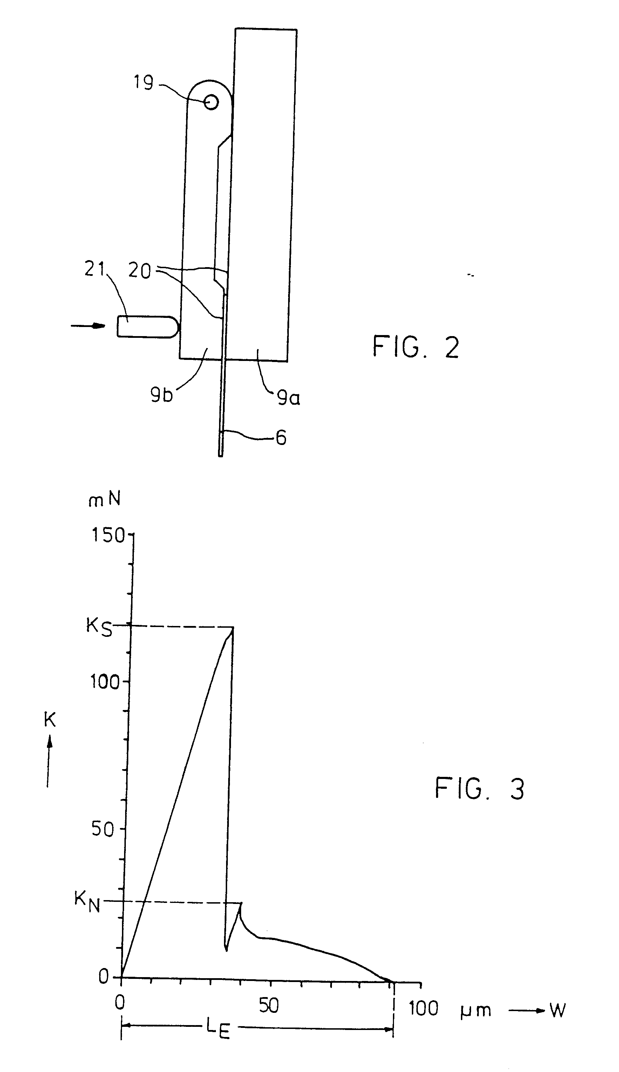

Fig. 2 zeigt den wesentlichen Teil der Fasereinspannvorrichtung 10 mit den Klemmbacken 9a und 9b. Die Klemmbacke 9a besteht aus einer polierten Metallplatte. die Klemmbacke 9b aus einer durchsichtigen Kunststoffplatte (z.B. PMMA), die an ihrem oberen Ende um eine Achse 19 drehbar ist. An ihrem unteren Ende weist die Kunststoffplatte 9b ebenso wie die Metallplatte 9a eine polierte Oberfläche 20 auf. Mittels einer Justierschraube 21 kann ein definierter Anpreßdruck auf die Kunststoffplatte 9b ausgeübt werden. Das obere Ende der Faser 6 befindet sich zwischen den beiden polierten Oberflächen der Klemmbacken 9a und 9b und wird dadurch in definierter Weise fixiert und gehalten. Außerdem kann der eingespannte Teil der Faser 6 durch die Kunststoffplatte hindurch beobachtet und auf Fehler beim Einspannen der Faser kontrolliert werden.

Der aus der Faser 6 und der Polymermatrix 7 bestehende Probekörper wird folgendermaßen hergestellt. Eine kleine Menge (z.B. 0.1 g) des zu untersuchenden thermoplastischen Kunststoffes wird in Granulat-oder Pulverform auf den Objekthalter der Probenhalterung 5 gebracht und so hoch erhitzt. daß der Kunststoff zu einem Tropfen (wie in Fig. 1 gezeigt) oder zu einem Film aufschmelzt. In diesem Tropfen oder Film wird mit Hilfe einer Vorrichtung, die ähnlich aufgebaut ist wie die verfahrbare Einspannvorrichtung 10 in Fig. 1, die zu untersuchende Faser 6 von oben her abgesenkt und in die aufgeschmolzene Polymermasse eingetaucht. Die Eintauchlänge kann dabei über den Hub der Einspannvorrichtung grob vorgewählt werden. Danach läßt man die Polymermasse wieder unter ihren Schmelzpunkt abkühlen. Die Faser ist dann im Eintauchbereich in der erstarrten kalottenförmigen Kunststoffmatrix (Fig. 1) eingebettet. Nach dem Aufschmelzen und Wiedererstarren der Polymermasse haftet die Matrix 7 in der Regel fest auf der Oberfläche des Objekthalters. Falls dies im Einzelfall erforderlich ist. kann noch eine zusätzliche Fixierung erfolgen.

Der genaue Wert der Einbettlänge kann mit Hilfe des Zugversuches (siehe Fig. 3) bestimmt werden. In Fig. 3 ist das Kraft-Weg-Diagramm eines Zugversuches dargestellt. Als Abszisse ist der von der Einspannvorrichtung 10 zurückgelegte Weg und als Ordinate die mit dem Kraftaufnehmer 2 gemessene Zugkraft aufgetragen. Man erkennt. daß die Kraft bis zu dem Wert $K_S$ linear mit dem Weg zunimmt. Dieser Bereich entspricht einer elastischen reversiblen Dehnung der Faser. Beim Erreichen der maximalen Kraft $K_S$ löst sich die Faser aus der Kunststoffmatrix. so daß die Kraft auf einen sehr geringen Wert abfällt. Anschließend muß erst wieder eine gewisse Kraft $K_N$ aufgebaut werden. die ausreichend ist, um die Haftreibung der Faser in der Polymermatrix zu überwinden. Der anschließende Bereich ist durch eine kontinuierliche Abnahme der Kraft gekennzeichnet. Diese Abnahme ist durch die immer kleiner werdende Restlänge der Faser in der Polymermatrix bedingt. Schließlich wird die Kraft Null, wenn die Faser ganz aus der Polymermatrix heraus gezogen ist. Diese Tatsache kann man wie in Fig. 3 gezeigt zur genauen Bestimmung der Einbettlänge $L_E$ heranziehen. Ein alternatives Verfahren zur Bestimmung der Einbettlänge $L_E$ besteht darin. daß man die Bewegungsrichtung der Einspannvorrichtung nach dem vollständigen Herausziehen der Faser umschaltet, so daß die Faserspitze in Richtung auf die Matrix 7 (Fig. 1) abgesenkt wird. Beim Auftreffen der Faserspitze auf die Matrix 7 tritt nun eine kleine Gegenkraft auf. die in Fig. 3 als "Kraft-Peak" gestrichelt eingezeichnet ist. Die Lage dieses Kraft-Peaks markiert also vom Nullpunkt aus gerechnet die Länge $L_E$ des im Matrixmaterial eingebetteten Bereiches der Faser. Die Einbettlänge $L_E$ kann damit in allen Fällen als Differenz der zu diesen beiden Punkten gehörenden Wegaufnehmerpositionen mit hinreichender Genauigkeit ermittelt werden. Dieses Verfahren ist wegen der höheren Genauigkeit dem oben beschriebenen Verfahren zur Bestimmung der Einbettlänge vorzuziehen.

Neben der Einbettlänge $L_E$ muß auch noch der Durchmesser d der Faser als weitere geometrische Größe bestimmt werden. Zu diesem Zweck wird nach dem Zugversuch die Polymermatrix 7 in Höhe der Fasereinbettung senkrecht zur Faser durchschnitten, so daß die Schnittoberfläche das der Faser entsprechende Loch enthält. Durch mikroskopische Vermessung des Loches kann man dann in einfacher Weise den Faserdurchmesser bestimmen.

## Ansprüche

1. Verfahren zur Bestimmung der Haftung einer in einer Polymermatrix (7) eingebetteten Einzelfaser (6), wobei ein Zugversuch durchgeführt wird, bei dem die Faser (6) aus der Polymermatrix (7) herausgezogen wird und gleichzeitig das dazugehörige Kraft-Weg-Diagramm registriert wird, dadurch gekennzeichnet, daß ein Probekörper einer in der Polymermatrix (7) eingebetteten Einzelfaser (6) dadurch hergestellt wird, daß auf einem Objekthalter (5) eine in Ganulat-oder Pulverform vorliegende Polymermenge aufgeschmolzen wird, die Einzelfaser (6) in axialer Richtung senkrecht zum Objekthalter (5) abgesenkt und in die aufgeschmolzene Polymermasse eingetaucht wird und die aufgeschmolzene Polymermasse anschließend unter den Schmelzpunkt abgekühlt wird, daß der Objekthalter (5) mit dem daran haftenden Probekörper (6, 7) in eine Kraft-Weg-Meßeinrichtung gebracht wird und das freie Ende der Faser (6) an einer in Faserrichtung verfahrbaren Fasereinspannvorrichtung (10) fixiert wird und daß der von der Fasereinspannvorrichtung (10) zurückgelegte Weg vom Wegaufnehmer (13) in ein elektrisches Signal umgesetzt wird.

2. Verfahren nach Anspruch 1, dadurch gekennzeichnet, daß nach dem Zugversuch die Polymermatrix (7) in Höhe der Fasereinbettung senkrecht zur Faserachse durchschnitten wird, so daß die Schnittoberfläche das der Faser (6) entsprechende Loch enthält und der Faserdurchmesser durch mikroskopische Vermessung des Loches bestimmt wird.

3. Verfahren nach Anspruch 1 bis 2, dadurch gekennzeichnet, daß bei der Herstellung des Probekörpers (6, 7) die Faser (6) über eine vorgegebene einstellbare Länge in die aufgeschmolzene Kunststoffmasse eingetaucht wird.

4. Verfahren nach Anspruch 1 bis 3, dadurch gekennzeichnet, daß im Kraftmeßteil ein Kraftaufnehmer (2) verwendet wird, dessen Wegänderung bei variierender Kraft vernachlässigbar klein ist.

5. Verfahren nach Anspruch 1 bis 4, dadurch gekennzeichnet, daß die Einbettlänge $L_E$ der Faser (6) in der Polymermatrix (7) aus der Differenz der Wegaufnehmerpositionen bei Beginn des Zugversuches und nach Herausziehen der Faser und Umschalten der Bewegungsrichtung beim Aufstoßen des Faserendes auf die Oberfläche der Polymermatrix (7) ermittelt wird.

6. Verfahren nach Anspruch 1 bis 5, dadurch gekennzeichnet, daß simultan mit dem Zugversuch eine Schallemissionsanalyse durchgeführt wird.

7. Vorrichtung zur Durchführung des Verfahrens nach Anspruch 1 bis 6, bestehend aus einer Kraft-Weg-Meßeinrichtung mit einer Halterung für den Probekörper und einer in Faserrichtung verfahrbaren Fasereinspannvorrichtung, dadurch gekennzeichnet, daß zur Kraftmessung ein elektronischer Kraftaufnehmer (2) mit der Halterung (5) für den aus der Polymermatrix (7) und der darin eingebetteten Faser (6) bestehenden Probekörper und zur Wegmessung ein elektronischer Wegaufnehmer (13) mit der Fasereinspannvorrichtung (10) mechanisch verbunden sind und daß das vom Kraftaufnehmer (2) erzeugte Signal dem einen Kanal und das vom Wegaufnehmer (13) erzeugte Signal dem anderen Kanal eines X-Y-Schreibers (16) zugeführt wird.

8. Vorrichtung nach Anspruch 7, dadurch gekennzeichnet, daß der Kraftaufnehmer (2) aus einer nach dem Prinzip der Nullmethode arbeitenden elektronischen Waage (3) besteht.

9. Vorrichtung nach Anspruch 7 bis 8, dadurch gekennzeichnet, daß die Fasereinspannvorrichtung (10) Klemmbacken (9a, 9b) aufweist, von denen wenigstens eine aus einem thermoplastischen halbharten Material besteht.

10. Vorrichtung nach Anspruch 7 bis 9, dadurch gekennzeichnet, daß zur Anpassung der Kraft-und Wegsignale ein Rechner (15) vorgesehen ist.

FIG. 1

FIG. 2

FIG. 3